# EUROPÄISCHE PATENTANMELDUNG

(11) **EP 1 101 964 A1**
(43) Veröffentlichungstag der Anmeldung: **23.05.2001**
(21) Anmeldenummer: 00124480.5
(22) Anmeldetag: 09.11.2000
(51) Int. Cl.: F16D 9/06

(54) **Überlastkupplung**

(30) Priorität: 16.11.1999 DE 19954938
(71) Anmelder: DEERE & COMPANY, Moline, Illinois 61265-8098 (US)
(72) Erfinder: Viaud, Jean, 70100 Gray (FR)
(74) Vertreter: Magin, Ludwig Bernhard

(57) **Zusammenfassung**

2.1. Bekannte Überlastkupplungen weisen ein Scherelement auf, das z. B. einen Flansch mit einem Zahnrad oder dergleichen verbindet und in einem Überlastzustand abschert. Diese Ausführung hat den Nachteil, daß bei Anhalten des Überlastzustandes der Flansch und/oder das Zahnrad nicht in eine Stellung gedreht werden können, in der ein neues Scherelement eingesetzt werden kann.
2.2. Es wird eine Überlastkupplung (14) vorgeschlagen, die ein erstes und ein zweites Kupplungselement (38, 40) enthält und die mittels Formschlußelementen (46, 46') drehfest miteinander verbindbar sind. Eines der Kupplungselemente (40 46') ist zur Aufnahme des Scherelements (42) ausgebildet, über das die Verbindung zwischen einem ersten und einem zweiten Teil (10) und (12) eines Antriebsstrangs hergestellt wird.
2.3. Überlastkupplungen werden z. B. in Landmaschinen verwendet.

## Beschreibung

Die Erfindung betrifft eine Überlastkupplung zwischen einem ersten und einem zweiten drehenden Teil, mit einem Scherelement.

Die US-A-4,220,019 offenbart eine Überlastkupplung mit einem Scherbolzen, der sich durch Öffnungen in einem Flansch einer Welle und einem Zahnrad erstreckt. An dem Zahnrad befindet sich des weiteren eine Klinke, die in eine Nut auf der Umfangsfläche des Flansches einrasten kann, wenn der Drehsinn umgekehrt wird. Auf diese Weise kann der Antrieb reversiert werden, um eine Verstopfung, die zu einem Abscheren des Scherbolzens geführt hat, zu beseitigen.

Das der Erfindung zugrunde liegende Problem wird darin gesehen, daß nach einem Abscheren des Scherbolzens der Flansch und das Zahnrad wieder in eine Stellung gebracht werden müssen, in der die Öffnungen miteinander fluchten, damit der Scherbolzen eingesetzt werden kann. Da oftmals sowohl die Welle wie auch das Zahnrad unter Last stehen, muß entweder zunächst die Störung beseitigt oder eine Antriebsverbindung getrennt werden, um die Fluchtung der Öffnungen zu erreichen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann das das Scherelement enthaltende Kupplungselement lastfrei in eine Stellung gebracht werden, in der das Scherelement eingesetzt werden kann, da keiner der drehenden Teile verstellt oder abhängig von der Anzahl möglichen Stellungen zwischen den beiden Kupplungselementen nur geringfügig verstellt werden muß. Die Kupplungselemente können auf verschiedene Art und Weise miteinander verbunden sein, z. B. mittels lösbarer axialer oder radialer Stift, mittels Schrauben, Klauen, etc.

Eine Möglichkeit, die Kupplungselemente miteinander zu verbinden und zu trennen, besteht in der Verwendung axial einander zugewandter Stirnseiten mit einander ergänzenden Formschlußelementen, insbesondere Verzahnungen. Auf diese Weise kann z. B. eine Vielzahl keilförmig verlaufender Zähne ineinander eingreifen. Je feiner die Zähne sind, desto genauer ist eine Fluchtung der Öffnungen zu erreichen und desto geringer wird ein evtl. doch noch vorhandener Versatz zwischen den drehenden Teilen.

Um die Kupplungselemente gegeneinander verstellen zu können, ist es vorteilhaft, wenn diese axial so gesichert werden, daß sie während des Betriebs nicht außer Eingriff voneinander geraten aber für Einstellungszwecke axial verschoben werden können. Dies kann z. B. mittels Splinten, Anschlägen, Schrauben, etc. erfolgen, die gegebenenfalls entfernt werden.

Anstatt formschlüssiger Sicherungselemente für die Kupplungselemente kann auch z. B. eine Feder vorgesehen werden, die dem normalerweise zu übertragenden Drehmoment standhält, aber von einer Bedienungsperson soweit gedrückt oder gezogen werden kann, daß die Formschlußelemente außer Eingriff geraten.

Wenn die Formschlußelemente eine Flanke aufweisen, die zu der Drehrichtung ansteigend geneigt verläuft, ist es möglich die Kupplungselemente mit relativ geringem Widerstand in einer Richtung soweit gegeneinander zu verdrehen, bis die Öffnungen für das Scherelement miteinander fluchten. Die Ausbildung der Formschlußelemente als Sägezahnprofil, d. h. mit einer ansteigenden und einer senkrechten oder gar negativen Flanke, wäre eine mögliche Ausbildungsform.

Nach einer anderen Ausführungsweise befinden sich die Formschlußelemente nicht auf radial verlaufenden Stirnseiten, sondern auf der Umfangsfläche, was zu geringeren Herstellungskosten führt.

Radial außen- oder innenliegende Formschlußelemente können mittels einer Hülse, einer Glocke, einem Gliederband oder dergleichen miteinander verbunden werden. Eine derartige Ausführungsform hat den Vorteil, daß die Formschlußelemente gegen die Einwirkung von Schmutz gesichert werden können bzw. sich in einer dem Schmutz nicht oder schwer zugänglichen Lage befinden.

Die Verwendung eines Flansches mit einer Bohrung für das Scherelement erlaubt es, die Bohrung mit größerem Abstand zu der Drehachse anzuordnen, so daß das Scherelement nicht allzu stark dimensioniert werden muß.

Eine einfache Anordnung ohne aufwendige Halterungen und dergl. ergibt sich, wenn alle einbezogenen Teile auf einem der drehenden Teile angeordnet sind und mit diesem drehen, so daß dieser gleichzeitig einen Träger darstellt.

Erntemaschinen unterliegen leicht der Gefahr der Verstopfung, und die davon betroffenen Teile lassen sich nur schwer bewegen bzw. sind schlecht zugänglich, so daß es bei diesen Maschinen einen großen Gewinn darstellt, wenn sie mit einer erfindungsgemäßen Überlastkupplung versehen sind.

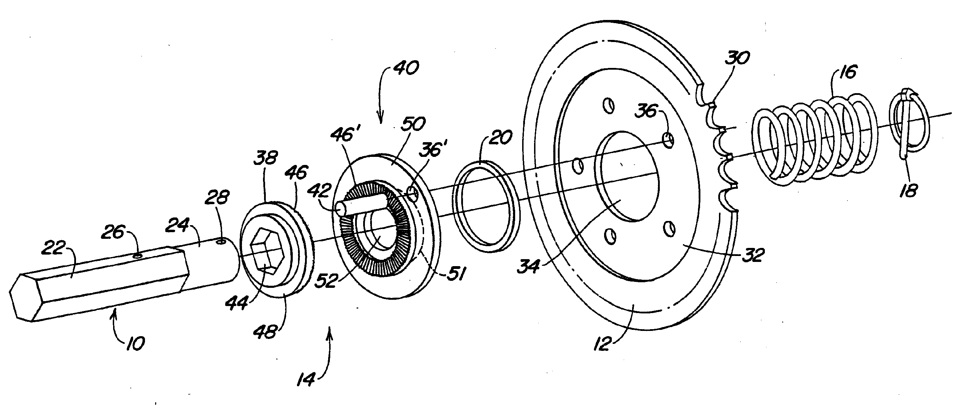

In der einzigen Figur der Zeichnung ist ein nachfolgend näher beschriebenes Ausführungsbeispiel der Erfindung dargestellt.

Die Zeichnung zeigt einen ersten Teil 10, einen zweiten Teil 12, eine Überlastkupplung 14, eine Feder 16, einen Splint 18 und einen Gleitring 20.

Der erste Teil 10 ist in dem dargestellten Ausführungsbeispiel als eine Welle mit einem Außensechskantabschnitt 22 und einem runden Abschnitt 24 ausgebildet, die axial aufeinander folgen. Sowohl in dem Außensechskantabschnitt 22 als auch in dem runden Abschnitt 24 ist eine diametral verlaufende Bohrung 26 bzw. 28 vorgesehen. Dieser Teil 10 kann sowohl den treibenden wie auch den getriebenen Teil eines Antriebs bilden.

Der zweite Teil 12 ist als ein Zahnrad ausgebildet, auf dessen Außenumfangsfläche eine Vielzahl von Zähnen 30 vorgesehen ist, die mit einer Kette in Verbindung treten können. Abweichend hiervon kann es sich aber auch um ein Zahnrad eines Getriebes oder um eine Riemenscheibe, um einen Flansch für die Verbindung mit einer weiteren Welle oder dergleichen handeln. Dieser Teil kann ebenfalls sowohl den treibenden wie auch den getriebenen Teil eines Antriebsstranges darstellen. Der zweite Teil 12 weist gegenüber dem ersten Teil 10 einen wesentlich größeren Durchmesser auf und beinhaltet eine mittige Kreisfläche 32 mit einer zentralen Kreisöffnung 34. Der Bereich der Kreisfläche 32 ist gegenüber dem verbleibenden Bereich des zweiten Teils 12 etwas eingesenkt und enthält auf einer Kreislinie mittig zwischen der Innen- und der Außenkante der Kreisfläche 32 fünf gleichmäßig verteilte Öffnungen 36. Im übrigen ist der zweite Teil 12 als eine im wesentlichen flache zylindrische Scheibe ausgebildet.

Der erste und der zweite Teil 10 und 12 sind in einen Antriebsstrang einer Erntemaschine, einer Erntebergungsmaschine oder einer sonstigen Landmaschine eingefügt und übertragen einen Antrieb zu einer Gutbearbeitungseinrichtung oder dergleichen. Einige Anwendungsbeispiele sind der Antrieb eines Preßkolbens einer Ballenpresse, einer Häckselvorrichtung, einer Erntegutaufnahmevorrichtung, eines Korntankentleerantriebs, etc.

Die Überholkupplung 14 setzt sich aus einem ersten und einem zweiten Kupplungselement 38 und 40 und einem Scherelement 42 zusammen.

Die Überholkupplung 14 dient der drehfesten Verbindung zwischen dem ersten und dem zweiten Teil 10 und 12 einerseits und der Unterbrechung des Antriebs, wenn ein Überlastzustand auftritt.

Das erste Kupplungselement 38 ist als eine Nabe ausgebildet, die jeweils konzentrisch eine Sechskantbohrung 44, radial verlaufende Formschlußelemente 46 und einen Hülsenbereich 48 aufweist.

Die Sechskantbohrung 44 ist so ausgebildet, daß das erste Kupplungselement 38 im wesentlichen spielfrei und drehfest auf der Außenfläche des ersten Teils 10 aufgenommen werden kann.

Die Formschlußelemente 46 sind alle in einer gemeinsamen, radial zu der Mittenachse des ersten Teils 10 verlaufenden Ebene angeordnet und von radial und somit keilförmigen Zähnen gebildet. In dem dargestellten Ausführungsbeispiel ist eine Vielzahl sehr feiner Zähne vorgesehen.

Der Hülsenbereich 48 erstreckt sich axial über ungefähr die Hälfte der Länge des ersten Kupplungselements 38 und weist einen gegenüber dem Rest geringeren Außendurchmesser auf. Der Hülsenbereich 48 wird ebenfalls von einer nicht dargestellten Bohrung diametral durchdrungen. Im montierten Zustand kann ein Spannstift, eine Schraube oder dergleichen durch die sich dann deckenden Bohrungen 26 gesteckt und der erste Kupplungsteil 38 auf dem ersten Teil 10 gesichert werden.

Der zweite Kupplungsteil 40 setzt sich aus einem Flansch 50 und Formschlußelementen 46' zusammen, die drehfest miteinander verbunden und koaxial zueinander angeordnet sind.

Der Flansch 50 ist so bemessen, daß er in dem Bereich der Kreisfläche 32 aufgenommen werden kann. In dem Flansch 50 befindet sich eine Öffnung 36', deren radiale Entfernung zu der Mittenachse des ersten Teils 10 im montierten Zustand der der Öffnung 36 entspricht. Die Öffnungen 36 und 36' können aneinander ausgerichtet werden und dienen der Aufnahme des Scherelements 42. Auf der dem zweiten Teil 12 zugelegenen Seite des Flansches 50 ist in nicht erkennbarer Weise eine Nabe angebracht, die sich durch die Kreisöffnung 34 erstreckt und den zweiten Teil 12 mittels des Gleitrings 20 auf sich drehbar aufnimmt.

Die Formschlußelemente 46' sind identisch zu den Formschlußelementen 46 auf dem ersten Kupplungselement 38 ausgebildet und spiegelbildlich zu diesen angeordnet. Die Formschlußelemente 46' sind in der Art einer Nabe an den Flansch 50 angebracht oder in diesen eingearbeitet.

Die Formschlußelemente 46 und 46' können mit Flanken versehen sein, die sich nur in der Axialrichtung erstrecken und somit in jeder Drehrichtung einen Anschlag bilden. Sie können aber auch sägezahnartig ausgebildet sein, d. h. mit einer axialen und einer ansteigenden Flanke, wobei sich die ansteigende Flanke beim normalen Betrieb nicht in der Drehrichtung erstrecken darf, da sonst die Verbindung wie eine Rutschkupplung wirken würde und die Feder 16 die drehfeste Verbindung garantieren müßte. Anstatt eines axialen Flankenverlaufs könnte auch ein negativer Verlauf, d.h. ein spitzer Winkel vorgesehen sein.

Eine Bohrung 52 erstreckt sich axial und mittig durch den zweiten Kupplungsteil 40, wobei der Durchmesser so gewählt ist, daß das zweite Kupplungselement 40 mit möglichst wenig Spiel und drehbar auf dem runden Abschnitt 24 des ersten Teils 10 aufgenommen werden kann. Mittels des zweiten Kupplungselements 40 wird folglich der zweite Teil 12 konzentrisch auf dem ersten Teil 10 gelagert.

Das Scherelement 42 ist in diesem Fall als ein einfacher zylindrischer Scherstift dargestellt. Abweichend hiervon kann auch eine Scherschraube oder dergleichen verwendet werden, wie dies bekannt ist.

Die Feder 16 ist als eine Schraubendruckfeder ausgebildet und zwischen der der Überlastkupplung 14 gegenüberliegenden Seite des zweiten Teils 12 und dem Splint 18 angeordnet.

Nach alledem ergibt sich folgender Aufbau und folgende Funktion.

Das erste Kupplungselement 38 wird auf den ersten Teil 10 aufgeschoben und mittels eines Spannstifts, der die Bohrung 26 im Außensechskantabschnitt 22 durchdringt, gesichert. Anschließend wird das zweite Kupplungselement 40 auf den runden Abschnitt 24 aufgeschoben und so gedreht, daß die Formschlußelemente 46, 46' miteinander in Eingriff gelangen. Des weiteren wird der zweite Teil 12 auf die nicht dargestellte Nabe auf der Rückseite des zweiten Kupplungselements 40 aufgesetzt und das Scherelement 42 durch die Öffnungen 36, 36' gesteckt, d. h. kraftschlüssig oder formschlüssig in diesen gesichert. Schließlich wird die Feder 16 mit einer bestimmten Vorspannung eingebaut; diese drückt im montierten Zustand den zweiten Teil 12 auf das zweite Kupplungselement 40, dieses auf das erste Kupplungselement 38, und letzteres stützt sich über den Spannstift oder dergleichen auf dem ersten Teil 10 ab.

Wenn diese Montage vorgenommen ist, kann ein Drehmoment zwischen dem ersten und dem zweiten Teil 10, 12 übertragen werden. Tritt ein Überlastzustand auf, wird das Scherelement 42 abscheren und die Verbindung zwischen dem zweiten Kupplungselement 40 und dem zweiten Teil 12 gelöst. Da einerseits eine Last ansteht, die bewirkt, daß sich einer der Teile 10 oder 12 nicht mehr oder nur sehr schwer bewegen kann, andererseits der freie Teil 12 oder 10 weiter dreht, geraten die Öffnungen 36, 36' aus der Flucht, und das Scherelement 42 kann nicht mehr eingesetzt werden. Um eine Fluchtung zu erreichen, wird das zweite Kupplungselement 40 gegenüber dem ersten Kupplungselement 38 auf den ansteigenden Flanken der Formschlußelemente 46, 46' so lange gedreht, bis die Öffnungen 36,36' wieder miteinander fluchten. Insbesondere dann, wenn die Formschlußelemente 46, 46' nur axial verlaufende Flanken aufweisen wird der zweite Teil 12 von dem zweiten Kupplungselement 40 gegen die Kraft der Feder 16 weg gedrückt, so daß die Kupplungselemente 38, 40 außer Eingriff miteinander geraten und gegeneinander verdreht werden können. Sollte die Kraft der Feder 16 zu hoch sein, kann auch der Splint 18 entfernt, die Feder 16 gelöst und das Kupplungselement 40 in eine Lage gedreht werden, in der sich die Öffnungen 36, 36' decken.

In einem nicht dargestellten Ausführungsbeispiel befinden sich die Formschlußelemente 46, 46' nicht auf radial verlaufenden Flächen sondern auf der Außenumfangsfläche des ersten und des zweiten Kupplungselements 38 und 40 in der Art eines Kettenrads oder dergleichen. Diese Formschlußelemente würden dann mittels einer verschiebbaren und innenverzahnten Glocke oder dergleichen miteinander drehfest verbunden werden. Anstatt einer Glocke könnte auch eine Doppelkette vorgesehen werden. Schließlich könnten die Formschlußelemente anstatt auf dem Außenumfang auch auf dem Innenumfang einer Bohrung vorgesehen und mittels einer außenverzahnten Hülse miteinander verbunden werden.

## Patentansprüche

1. Überlastkupplung (14) zwischen einem ersten und einem zweiten drehenden Teil (10, 12), mit einem Scherelement (42), gekennzeichnet durch zwei in verschiedenen Stellungen formschlüssig miteinander verbindbare Kupplungselemente (38, 40), von denen eines mit dem ersten drehenden Teil (10) und das andere mittels des Scherelements (42) mit dem zweiten drehenden Teil (12) verbindbar ist.

2. Überlastkupplung nach Anspruch 1, dadurch gekennzeichnet, daß die beiden Kupplungselemente (38, 40) an axial einander zugewandten Stirnseiten einander ergänzende Formschlußelemente (46, 46'), insbesondere Verzahnungen, aufweisen.

3. Überlastkupplung nach Anspruch 2, dadurch gekennzeichnet, daß wenigstens einer der drehenden Teile (12) axial beweglich gelagert ist.

4. Überlastkupplung nach Anspruch 2 oder 3, dadurch gekennzeichnet, daß auf den axial beweglichen Teil (12) eine Feder (16) wirkt.

5. Überlastkupplung nach einem oder mehreren der vorherigen Ansprüche, dadurch gekennzeichnet, daß die Formschlußelemente (46, 46') als Zähne ausgebildet sind, deren eine Flanke zu der Drehrichtungsebene geneigt verläuft.

6. Überlastkupplung nach Anspruch 1, dadurch gekennzeichnet, daß die Kupplungselemente (38, 40) auf ihrem Umfangsbereich miteinander fluchtende Formschlußelemente (46, 46') aufweisen.

7. Überlastkupplung nach Anspruch 6, dadurch gekennzeichnet, daß eine die Formschlußelemente (46, 46') miteinander verbindbare Kupplung, insbesondere ein Band, eine Glocke oder eine Hülse vorgesehen ist.

8. Überlastkupplung nach einem oder mehreren der vorherigen Ansprüche, dadurch gekennzeichnet, daß das das Scherelement (42) tragende zweite Kupplungselement (40) einen Flansch (50) mit einer Bohrung (36') aufweist.

9. Überlastkupplung nach einem oder mehreren der vorherigen Ansprüche, dadurch gekennzeichnet, daß die Kupplungselemente (38, 40), einer der drehenden Teile (12) und gegebenenfalls die Feder (16) auf dem anderen drehenden Teil (10) angeordnet sind.

10. Erntemaschine mit einer Überlastkupplung (14) nach einem oder mehreren der vorherigen Ansprüche.
